# EUROPEAN PATENT APPLICATION

(11) **EP 1 527 698 A1**
(43) Date of publication of application: **04.05.2005**
(21) Application number: 04394064.2
(22) Date of filing: 01.11.2004
(51) Int. Cl.: A23G 9/28

(54) **Food preparation station**

(30) Priority: 30.10.2003 IE 20030813
(71) Applicant: Levins, John, Drogheda, County Louth (IE)
(72) Inventor: Levins, John, Drogheda, County Louth (IE)
(74) Representative: Schütte, Gearoid

(57) **Abstract**

A food preparation station (120) has a compact upright ground engaging support frame (2). A worktop (3) is mounted on the support frame (2) with a hand wash basin (4). An agitator (6) is mounted on the support frame (2) above the hand wash basin (4) and is operable for mixing ice-cream with selected flavourings or confectionary inclusions in a cup to provide different ice-cream based products such as milkshakes, sundaes and the like. Hot liquid topping dispensers (65) mounted on the worktop (3) have dispensing heads (66) which terminate above the hand wash basin (4). Confectionary inclusion dispensers (60) and bottles (20) of milk for preparation of milk for preparation of the products are mounted on sidewalls of the support frame (2) above the worktop (3). The food preparation station is for use in association with an ice-cream machine (100) to form a selection of products.

## Description

This invention relates to a food preparation station, in particular for the preparation of ice-cream based products at retail outlets and the like.

A number of mobile compact food preparation stations, often for intermittent use only, have been proposed before. For example in WO 82/00944 there is disclosed a van incorporating machinery for preparing ice-cream and iced drinks. Typically the van is driven around the streets in search of customers, usually playing a jingle to attract attention. In US 3748437 there is disclosed a wheeled cart for use at public events, particularly where access may be limited in buildings and the like.

Retail outlets such as newsagents, garages and the like are now providing more diverse products, and in particular fast food products, to attract custom and to stay competitive. However typically in such premises floor spaced is very limited and the aforementioned prior art food preparation stations would not be suitable and do not overcome this difficulty.

It is an object of the present invention to provide a compact multi-purpose food preparation station for the preparation of a number of different ice-cream based products in an efficient, cost effective and hygienic manner in retail outlets where floor space is limited.

According to the invention there is provided a compact upright freestanding food preparation station, including:
a ground engaging support frame,
a work top mounted on the support frame at a suitable height for a person to prepare a food product at the worktop,
a hand washbasin mounted in the worktop with an associated tap for connection to a cleaning water supply,
an agitator which is operable for mixing ice-cream with selected flavourings and/or confectionary inclusions in a cup, said agitator being mounted on the support frame above the hand wash basin, and
food storage means for a number of said selected flavourings, confectionary inclusions, toppings and the like for preparation of a number of different ice-cream based products.

Advantageously the food preparation station allows the production of a range of ice-cream based products in a simple, convenient and hygienic manner. The food preparation station is a relatively compact unit, typically having a width in the order of 25 inches (635mm). This facilitates installation of the unit in areas where space is limited, such as many retail outlets and the like. The unit is prefabricated so it is readily easily and quickly installed.

In a particularly preferred embodiment a storage and dispensing rack is provided for bottles of milk for use in the preparation of milkshake products.

In another embodiment the bottle storage and dispensing rack is mounted on an inner face of a sidewall of the support frame above the worktop.

In one embodiment the storage and dispensing rack comprises a pair of substantially parallel inclined panels which are vertically spaced-apart for reception of a bottle on its side therebetween, with a bottle retaining stop at a front lower end of the lowermost panel and a bottle dispensing opening at said front lower end. Ideally a stack of inclined panels is provided for storing bottles between adjacent pairs of panels.

In another embodiment the bottle storage and dispensing rack includes a lower support rail for reception of a bottle standing thereon and an outer side rail above the lower support rail for engaging and supporting a bottle in an upright position on the lower support rail between the outer side rail and the inner face of the side wall.

In another embodiment container storage means is provided for containers within which the food products are prepared. Preferably said container storage means includes a cup dispenser. Conveniently said cup dispenser is mounted above the worktop to provide an overhead magazine of cups. A cup lid dispenser is also mounted on the support frame.

In another embodiment means is provided for hands free operation of the tap at the hand wash basin.

In another embodiment the tap at the wash hand basin is operable by an associated foot pedal mounted at a bottom of the support frame at the front of the support frame.

In a further embodiment a water heater is provided for heating the wash water before delivering to the hand wash basin. Conveniently also a hand cleansing liquid dispenser is mounted adjacent the hand wash basin with a dispensing outlet located above the hand wash basin.

In one embodiment of the invention at least one liquid topping dispenser is provided on the support frame, said liquid topping dispensing having a reservoir for said liquid topping material, means for discharging liquid topping material from said reservoir, said means including a dispensing head which terminates above the hand wash basin. A heater may be provided in each reservoir for heating the liquid topping material prior to dispensing.

In another embodiment a hot topping dispenser is provided on the support frame. Preferably the hot topping dispenser is mounted such that a dispensing head outlet of the hot topping dispenser is located above the hand wash basin.

In another embodiment the agitator is mounted on the support frame above the hand wash basin. Preferably the agitator is mounted on a rear wall of the support frame above the worktop and the hand wash basin is mounted at an inner end of the worktop adjacent the rear wall.

In another embodiment the agitator has a housing within which is mounted a motor for rotatably driving a downwardly depending mixing arm which terminates in a mixing head, said mixing arm and mixing head being housed in a forwardly open enclosure.

In another embodiment means is provided for hands free operation of the agitator. Said means may be provided by an associated foot pedal mounted at a bottom of the support frame at a front of the support frame.

In another embodiment a refuse bin is mounted on the support frame beneath the worktop, an opening being provided through the worktop for delivery of waste into the bin. A downwardly depending chute may be provided to direct material into the refuse bin.

In a further embodiment a number of confectionary inclusion dispensers are mounted on an inner face of a side wall of the support frame above the worktop.

In another embodiment an overhead cup dispenser is mounted on the support frame above the worktop, with cup dispensing openings in a bottom of the cup dispenser.

In another embodiment there is provided a compact upright freestanding food preparation station for preparation of ice-cream based food products, including a ground engaging support frame having an upstanding rear wall and associated upstanding side walls extending outwardly from the rear wall, a horizontal worktop mounted on the support frame extending outwardly from the rear wall between the side walls, said side walls and rear wall extending upwardly of the worktop, and means for preparation of food products being mounted on inside faces of the rear wall and the side walls above the worktop.

In another aspect the invention provides a method for manufacturing a milkshake product including delivering selected quantities of ice-cream, UHT milk and a flavouring into a container and mixing the ice-cream, UHT milk and flavouring together to form a milk shake product of a desired flavour in the container. Conveniently the agitator in the food preparation station can be used for the mixing.

In another embodiment the method includes mixing selected quantities of ice-cream and a flavoured UHT milk to form a milkshake of a desired flavour in the container.

Advantageously the provision of bottles of UHT milk means that a refrigerator is not required to keep the milk fresh.

The invention will be more clearly understood by the following description of some embodiments thereof given by way of example only, with reference to the accompanying drawings, in which:
Fig. 1 is a perspective view of a food preparation station according to the invention;
Fig. 2 is another perspective view of the food preparation station;
Fig. 3 is a detail perspective view of an upper portion of the workstation;
Fig. 4 is a detail perspective view of a lower portion of the work station;
Fig. 5 is a front elevational view of another food preparation station according to the invention;
Fig. 6 is a side sectional elevational view of the food preparation station shown in Fig. 5;
Fig. 7 is another side sectional elevational view of the food preparation station shown in Fig. 5; and
Fig. 8 is a sectional plan view of the food preparation station shown in Fig. 5.

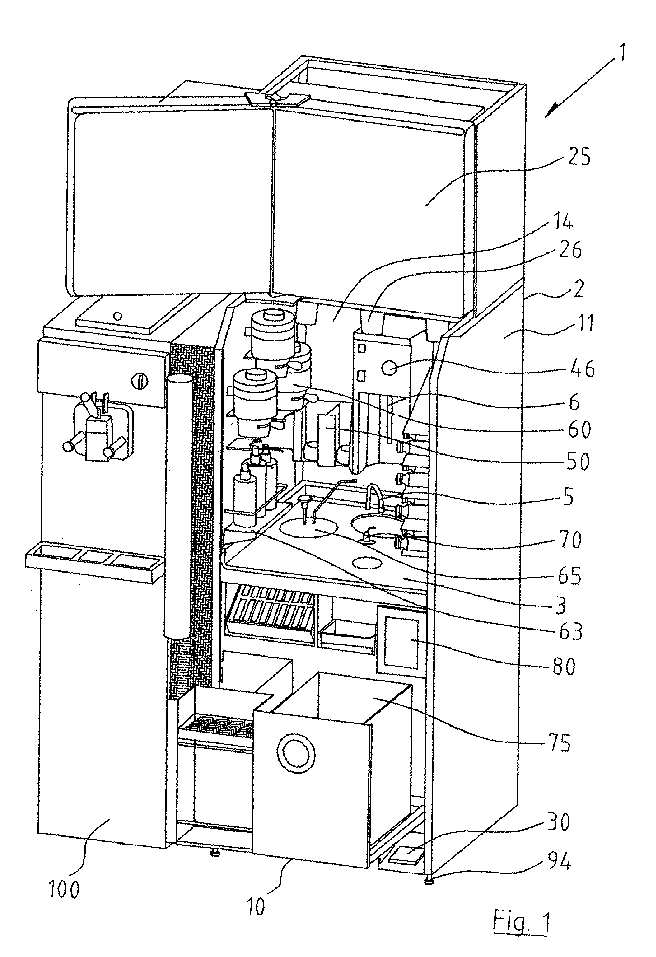

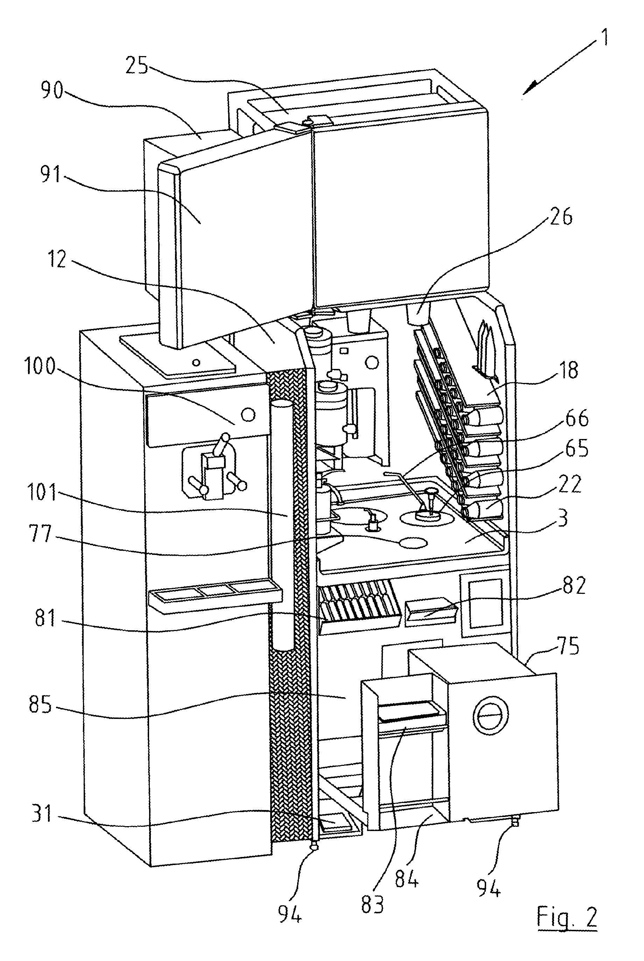

Referring to the drawings, and initial to Figs. 1 to 4 thereof, there is illustrated a food preparation station according to the invention indicated generally by the reference numeral 1. The food preparation station 1 has an upstanding ground-engaging support frame 2. A worktop 3 is mounted on the support frame 2 at a comfortable height for a standing person to prepare a food product at the worktop 3. A hand wash basin 4 is mounted in the worktop 3 with an associated tap 5. An agitator 6 is mounted on the support frame 2 above the hand wash basin 4 and is operable for mixing ice-cream with selected flavourings and/or confectionary inclusions in a cup. Various different food storage means are provided as described later for storing and dispensing a number of selected flavourings, confectionary inclusions, toppings and the like for preparation of a number of different ice-cream based products.

The support frame 2 has a bottom 10, upstanding side walls 11, 12 and rear wall 14, the side walls 11, 12 extending from the rear wall 14. The worktop 3 extends outwardly horizontally from the rear wall 14 between the side walls 11, 12. An upturned rim 15 extends around the sides and back of the worktop 3.

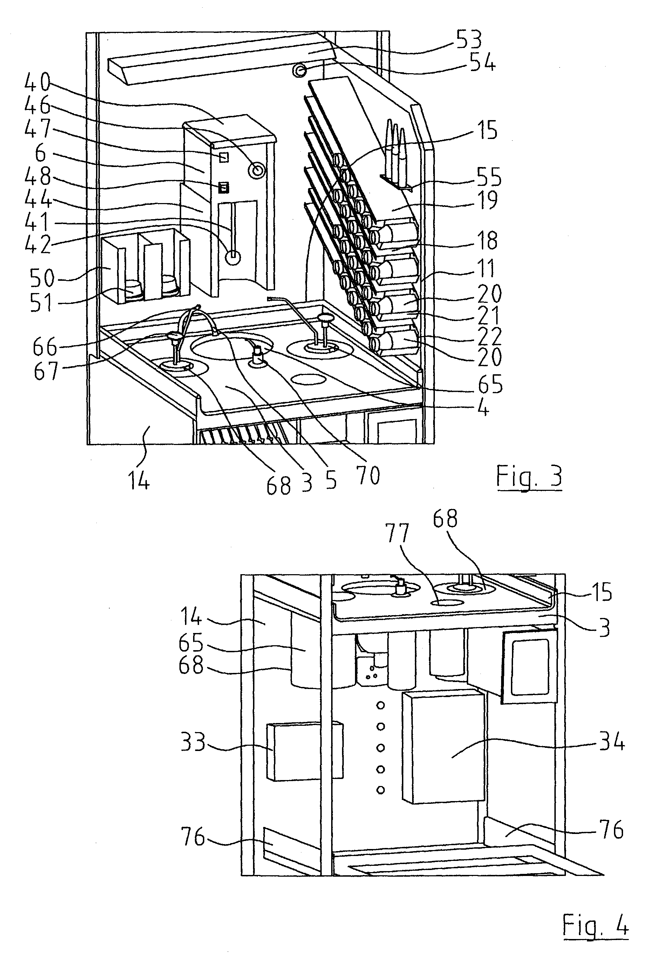

A bottle storage and dispensing rack assembly 18 is mounted on an inside face of one of-the side walls 11. This comprises a stack of substantially parallel inclined panels 19 mounted on an inside face of the right side wall 11. Adjacent pairs of panels 19 are vertically spaced-apart by a distance sufficient for reception of a bottle 20 on its side therebetween. A bottle retaining stop 21 is provided at a front lower end of a lowermost panel 19 in each pair of panels 19. A bottle dispensing opening 22 is provided between adjacent panels 19 at the front lower end thereof as shown in Fig. 3. In this way a bottle 20 can be removed and the bottles in the rack roll forwardly until the leading bottle 20 abuts the stop 21. The bottles 20 are bottles of UHT milk used for preparation of milkshakes.

A cup dispenser 25 is mounted above the worktop 3 to provide an overhead magazine of cups 26 within which the ice-cream based products are prepared and dispensed to customers. The cup dispenser 25 has openings in the bottom through which the cups 26are discharged, by being pulled downwardly.

The tap 5 at the hand wash basin 4 is operable by an associated foot pedal 30 mounted at a bottom of the support frame 2 at a front of the support frame 2. In similar fashion an agitator foot pedal 31 is also provided at a bottom of the support frame at the front of the support frame for operating the agitator 6. Thus hands free operation of the agitator 6 or tap 5 is possible.

A water heater 33 (Fig. 4) is mounted beneath the worktop 3 for heating water before delivery through the tap 5. An electrical power supply junction box 34 associated with the various electrical heaters and components of the system is also mounted beneath the worktop 3 on a rear wall 4 of the support frame 2.

The agitator 6 is mounted on the rear wall 14 of the support frame 2. The agitator 6 has a housing with an upper portion 40 within which is mounted a motor for rotatably driving a downwardly depending mixing arm 41 terminating in a mixing head 42. It will be noted that the mixing arm 41 and mixing head 42 are located above the hand wash basin 4 and are housed within a forwardly open enclosure formed by a channel section lower portion 44 of the housing. An emergency stop button 46 is provided on the upper portion 40 of the housing together with hand operated start and stop buttons 47, 48.

A lid dispenser 50 containing lids 51 for the cups 26 is also mounted on the rear wall 14 of the support frame 2. A lamp 53 is mounted on the rear wall 14 at the top to direct light downwardly towards the worktop 3. An on/off button 54 controls the lamp 53. A cone sleeve holder 55 is mounted on the right side wall 11 above the bottle rack 18.

A number of confectionary inclusion dispensers 60 are mounted on the inner face of the left side wall 12 of the support frame 2. These contain for example chocolate pieces, honeycomb pieces and the like, typically sized up to about 10mm, for mixing with ice-cream to produce one of the products. Directly below the inclusion dispensers 60 is provided a shelf 63 for supporting a number of bottles of topping materials such as syrups and the like.

A pair of hot liquid topping dispensers 65 are mounted on the worktop 3 and each has a reservoir 68 for liquid topping material and a dispensing head 66 which terminates above the hand wash basin 4 and an operating plunger 67 for discharging liquid topping material from the reservoir 68 through the dispensing head 66. A heater is provided in each reservoir 68 for heating the liquid topping material.

A hand cleaning liquid dispenser 70 is mounted on the worktop 3 adjacent the hand wash basin 4 and has a dispensing head which extends over the hand wash basin 4.

A refuse bin 75 is mounted beneath the worktop 3 slidably supported on associated guide rails 76 on the support frame 2 for movement into and out of the support frame 2. It will be noted that when the refuse bin 75 is nested within the support frame 2 it is located directly beneath an associated opening 77 which extends through the worktop 3 for delivery of waste through a chute 78 beneath the opening 77 into the bin 75.

A napkin dispenser 80 is also mounted beneath the worktop 3 as are a flake dispenser 81, spoon dispenser 82, straw dispenser 83 and cup carrier dispenser 84. A storage area 85 for inclusions is also provided beneath the worktop 3.

A storage cupboard 90 fronted by a door 91 which may carry a display sign or logo is mounted at a top of the support frame 2 adjacent the cup dispenser 25 and projecting laterally outwardly therefrom. Height adjustable feet 94 are provided at a bottom of the support frame 2.

An ice-cream machine 100 is shown in the drawings mounted alongside the food preparation station 1 and is used in conjunction with the food preparation station to produce a range of ice-cream based products. A cone dispenser 101 is mounted at the ice-cream machine 100.

In use, it will be appreciated that the food preparation station of the invention can be used in conjunction with an ice-cream machine 100 to produce a range of ice-cream based products. These include, in addition to the normal cones produced by the ice-cream machine 100, milkshake products, sundaes and treat products incorporating the confectionary inclusions.

Milkshake products are prepared by combining in a cup 26 UHT milk from the bottles 20, ice-cream and a flavouring. Typical flavourings include banana, strawberry, vanilla and chocolate. The flavouring is mixed with the milk and the ice-cream by means of the agitator 6 by inserting the head 42 into the contents of the cup 26 and agitating the contents by means of the head 42.

A sundae product is prepared by delivering ice-cream into a cup 26 and then topping the ice-cream with a hot sauce, typically caramel or chocolate from one of the dispensers 65.

A treat product is prepared by delivering ice-cream into a cup 26 with confectionary pieces dispensed from the inclusion dispensers 60 and then mixed together using the agitator 6.

It will be appreciated that in another novel aspect the invention provides a method for producing a milkshake comprising a mixture of UHT milk, ice-cream and flavouring. Conveniently the UHT milk may be flavoured and it is simply necessary to mix the milk from one of the bottles 20 with the required quantity of ice-cream in a cup 26.

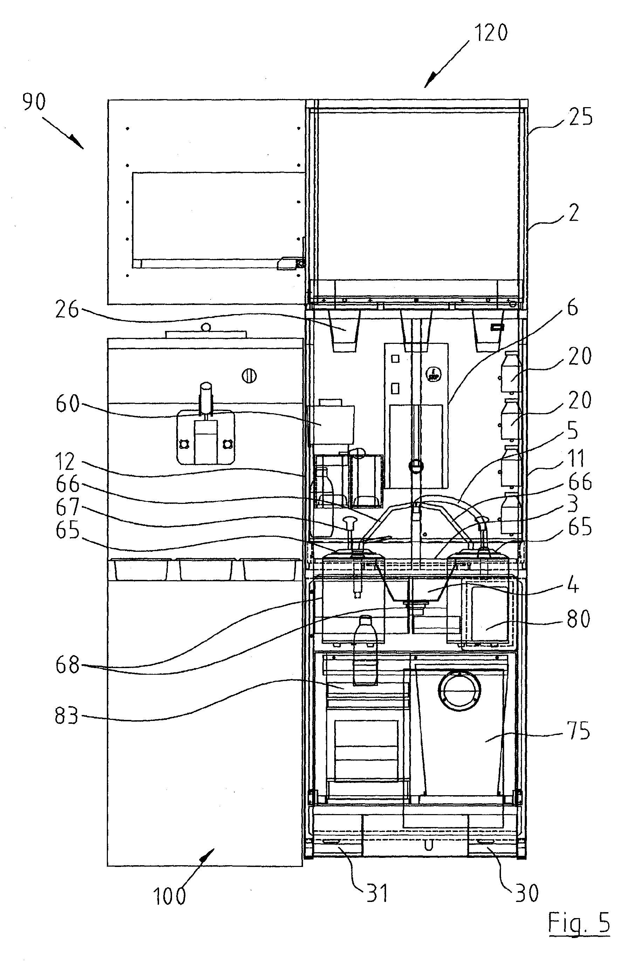

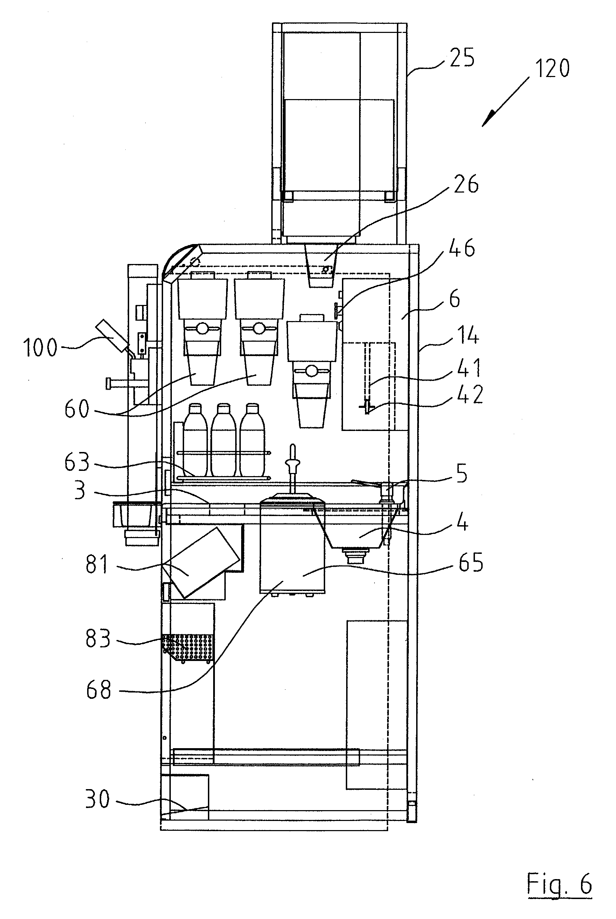

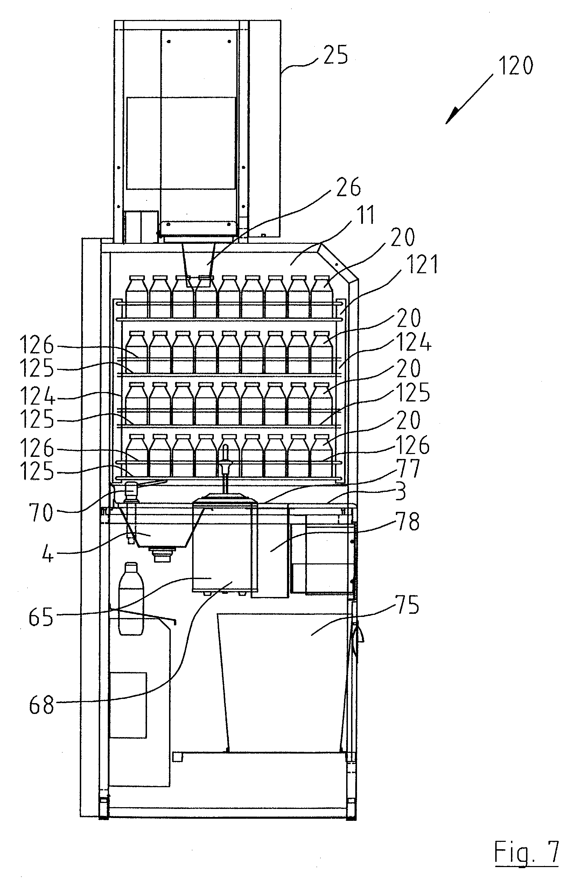

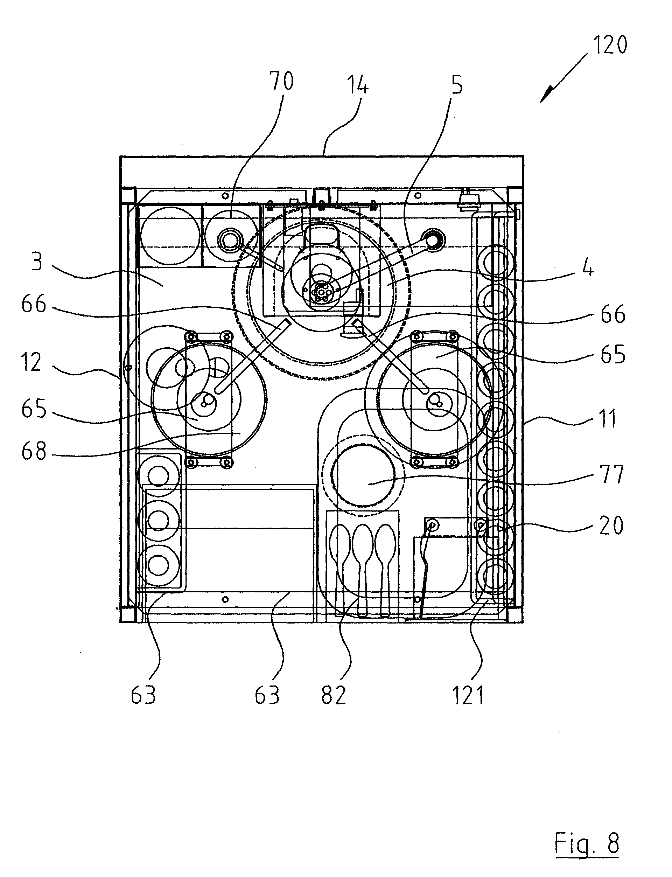

Referring now to Figs. 5 to 8 there is illustrated another food preparation station indicated generally by the reference numeral 120. This is largely similar to the food preparation station described previously and like parts are assigned the same reference numerals. In this case the bottles 20 are stored in an upright position on a rack 121 mounted on the side 11 of the support frame 2. The rack 121 has side members 124 secured to the inside face of the side wall 11. A plurality of spaced-apart lower support rails 125. The lower support rails 125 are bent inwardly at each end and attached to the side embers 124. The lower support rails 125 are spaced-apart from the side wall 11 by a distance approximately equal to half the diameter of the bottles 20. Associated with each lower support rail 125 is an outer side rail 126 above the lower support rail 125 for engaging and supporting a bottle 20 in an upright position on the lower support rail 125 between the outer side rail 126 and the inner face of the side wall 11. Each outer side rail 126 is turned inwardly at each end for attachment to the side members 124. The outer side rail 126 is spaced-apart from the side wall 11 by a distance slightly greater than the diameter of the bottles 20.

The invention is not limited to the embodiments hereinbefore described which may be varied in both construction and detail within the scope of the appended claims.

## Claims

1. A compact upright free standing food preparation station (1, 120) for preparation of ice-cream based food products at a retail outlet point of sale, including:
a ground engaging support frame (2),
a worktop (3) mounted on the support frame (2) at a suitable height for a person to prepare a food product at the worktop (3),
a hand washbasin (4) mounted in the worktop (3) with an associated tap(5) for connection to a cleaning water supply,
an agitator (6) which is operable for mixing ice-cream with selected flavourings and/or confectionary inclusions in a cup, said agitator (6) being mounted on the support frame (2) above the hand wash basin (4), and
food storage means for a number of said selected flavourings, confectionary inclusions, toppings and the like for preparation of a number of different ice-ream based products.

2. A food preparation station (1) as claimed in claim 1 wherein at least one liquid topping dispenser (65) is provided on the support frame (2), said liquid topping dispenser (65) having a reservoir (68) for said liquid topping material, means (67) for discharging liquid topping material from said reservoir (68), said means (67) including a dispensing head (66) which terminates above the hand wash basin (4).

3. A food preparation station (1, 120) as claimed in claim 2 wherein a heater is provided in each reservoir (68) for heating the liquid topping material.

4. A food preparation station (1, 120) as claimed in any preceding claim wherein the agitator (6) is mounted on a rear wall (14) of the support frame (2) above the worktop (3) and the hand wash basin (4) is mounted at an inner end of the worktop (3) adjacent the rear wall (14).

5. A food preparation station as claimed in any preceding claim wherein the agitator (6) has a housing within which is mounted a motor for rotatably driving a downwardly depending mixing arm (41) which terminates in a mixing head (42), said mixing arm (41) and mixing head (42) being housed in a forwardly open enclosure (44).

6. A food preparation station as claimed in any preceding claim wherein means (31) is provided for hands free operation of the agitator (6).

7. A food preparation station as claimed in any preceding claim wherein means (30) is provided for hands free operation of the tap (5) of the hand wash basin (4).

8. A food preparation station (1, 120) as claimed in any preceding claim 1 or claim 2 wherein the tap (5) at the wash hand basin (4) is operable by an associated foot pedal (30) mounted at a bottom of the support frame (2) at the front of the support frame (2), a water heater (33) is provided for heating the wash water before delivering heated water to the hand wash basin (4), and a hand cleansing liquid dispenser (70) is mounted adjacent the hand wash basin (4) with a dispensing outlet located above the hand wash basin (4).

9. A food preparation station as claimed in any preceding claim wherein a bottle storage and dispensing rack is mounted on the support frame (2).

10. A food preparation station as claimed in claim 9 wherein the bottle storage and dispensing rack is mounted on an inner face of a side wall of the support frame above the worktop.

11. A food preparation station as claimed in claim 9 or claim 10 wherein the bottle storage and dispensing rack includes at least one pair of substantially parallel inclined supports which are vertically spaced-apart for reception of a bottle on its side therebetween, with a bottle retaining stop at a front lower end of the lowermost support and a bottle dispensing opening at said front lower end.

12. A food preparation station as claimed in claim 10 wherein the bottle storage and dispensing rack includes a lower support rail for reception of a bottle standing thereon and an outer side rail above the lower support rail for engaging and supporting a bottle in an upright position on the lower support rail between the outer side rail and the inner face of the side wall.

13. A food preparation station (1, 120) as claimed in any preceding claim wherein a refuse bin (95) is mounted on the support frame (2) beneath the worktop (3), an opening (77) being provided through the worktop (3) for delivery of waste into the bin (75).

14. A food preparation station as claimed in any preceding claim wherein a number of confectionary inclusion dispensers are mounted on an inner face of a side wall of the support frame above the worktop.

15. A food preparation station as claimed in any preceding claim wherein an overhead cup dispenser is mounted on the support frame above the worktop, with cup dispensing openings in a bottom of the cup dispenser.

16. A food preparation station as claimed in any preceding claim wherein the support frame has an upstanding rear wall and associated upstanding side walls extending outwardly from the rear wall, a horizontal worktop mounted on the support frame extending outwardly from the rear wall between the side walls, said side walls and rear wall extending upwardly of the worktop, means for preparation of food products being mounted on inside faces of the rear wall and the side walls above the worktop.
